**Europäisches Patentamt**

**European Patent Office**

**Office européen des brevets**

(19)

(11) Numéro de publication : **0 290 309 B1**

(12) **FASCICULE DE BREVET EUROPEEN**

(45) Date de publication du fascicule du brevet :
**18.09.91 Bulletin 91/38**

(51) Int. Cl.$^5$ : **B60N 2/22**, B60N 2/10,
F16H 1/32

(21) Numéro de dépôt : **88400975.4**

(22) Date de dépôt : **21.04.88**

(54) **Satellite double à denture renforcée pour articulation micrométrique utilisée plus spécialement dans les sièges de véhicules.**

(30) Priorité : **05.05.87 FR 8706317**

(43) Date de publication de la demande :
**09.11.88 Bulletin 88/45**

(45) Mention de la délivrance du brevet :
**18.09.91 Bulletin 91/38**

(84) Etats contractants désignés :
**AT BE CH DE ES GB GR IT LI LU NL SE**

(56) Documents cités :
**FR-A- 2 133 094**
**FR-A- 2 201 622**
**FR-A- 2 510 374**
**GB-A- 713 587**
**GB-A- 1 204 641**

(73) Titulaire : **A. & M. COUSIN Etablissements**
**COUSIN FRERES**
**Le Bois de Flers**
**F-61103 Flers Cédex Orne (FR)**

(72) Inventeur : **Droulon, Georges**
**Rue de la Garenne St Georges des Groseillers**
**F-61100 Flers (FR)**
Inventeur : **Pipon, Yves**
**La Garenne St Georges des Groseillers**
**F-61100 Flers (FR)**

(74) Mandataire : **Madeuf, Claude Alexandre Jean**
**et al**
**CABINET MADEUF 3, avenue Bugeaud**
**F-75116 Paris (FR)**

## Description

On utilise couramment des articulations dans les sièges de véhicules soit pour régler l'inclinaison du dossier du siège, soit pour régler l'inclinaison de l'assise, ce dernier mouvement étant appelé réglage de l'assiette du siège. Ces articulations sont de deux types, soit articulation dite à grains soit articulation dénommée en général micrométrique, c'est-à-dire permettant un réglage extrêmement fin des deux positions, pratiquement un réglage à peine perceptible lorsqu'une faible rotation est menée sur le bouton de commande.

Dans le second type d'articulation micrométrique, il est nécessaire qu'entre les deux dentures fixes et mobiles des flasques soit interposé un satellite, comportant deux dentures adjacentes.

Actuellement la réalisation de la denture du plus grand diamètre du satellite est obtenue par découpage après l'opération de matriçage de la plus petite denture.

On comprend donc aisément que la denture de plus grand diamètre ainsi réalisée n'a pour liaison à la masse du satellite que la base de la denture, seule la denture du diamètre plus petit est adjacente à la face du grand diamètre.

De ce fait, la force nécessaire pour fléchir les dents et les casser est d'une certaine valeur assez vite atteinte. Si le satellite est détérioré, il est nécessaire alors de remplacer l'articulation.

La présente invention a pour objet une modification de la disposition des dents sur le satellite pour permettre, au moment de sa fabrication, l'obtention d'une joue centrale raidissant le satellite, joue centrale à laquelle sont accolées de chaque côté, les dentures ayant un nombre de dents différent.

On obtient ainsi un satellite dont la résistance des dents est identique de part et d'autre de la joue centrale sans pour cela augmenter considérablement le volume et le poids du satellite mais qui permet une augmentation considérable de la résistance de l'articulation micrométrique.

De plus, l'invention s'étend aussi bien aux satellites ayant deux diamètres de denture, qu'aux satellites ayant un même diamètre de denture mais avec un nombre de dents différent d'où un module différent.

Conformément à l'invention, le satellite double à denture renforcée pour articulation micrométrique utilisée plus spécialement dans les sièges de véhicules, satellites dans lesquels les dentures ayant des diamètres différents mais un même module de dent ou un même diamètre de denture mais des modules différents de denture, sont réalisées par matriçage sur une certaine profondeur d'un disque, est caractérisé en ce que le matriçage ménage, dans le plan médian du disque, une joue centrale contre les côtés opposés de laquelle s'appuient respectivement les dentures en raidissant de ce fait chaque dent pour éviter son écrasement ou sa déformation.

Des formes de réalisation de l'objet de l'invention sont représentées, à titre d'exemple non limitatifs, au dessin annexé.

La fig. 1 est une élévation de face, partie en coupe d'une première forme de réalisation de l'invention d'un satellite présentant deux dentures opposées de diamètres différents mais ayant un même module de dents.

La fig. 2 est une vue de face correspondant à la fig. 1 suivant la flèche F2 de la fig. 1.

La fig. 3 est une élévation partielle d'une autre forme de réalisation d'un satellite à diamètre de denture constant mais à module de dent différent.

La fig. 4 montre schématiquement une articulation ronde munie du satellite de la fig. 1.

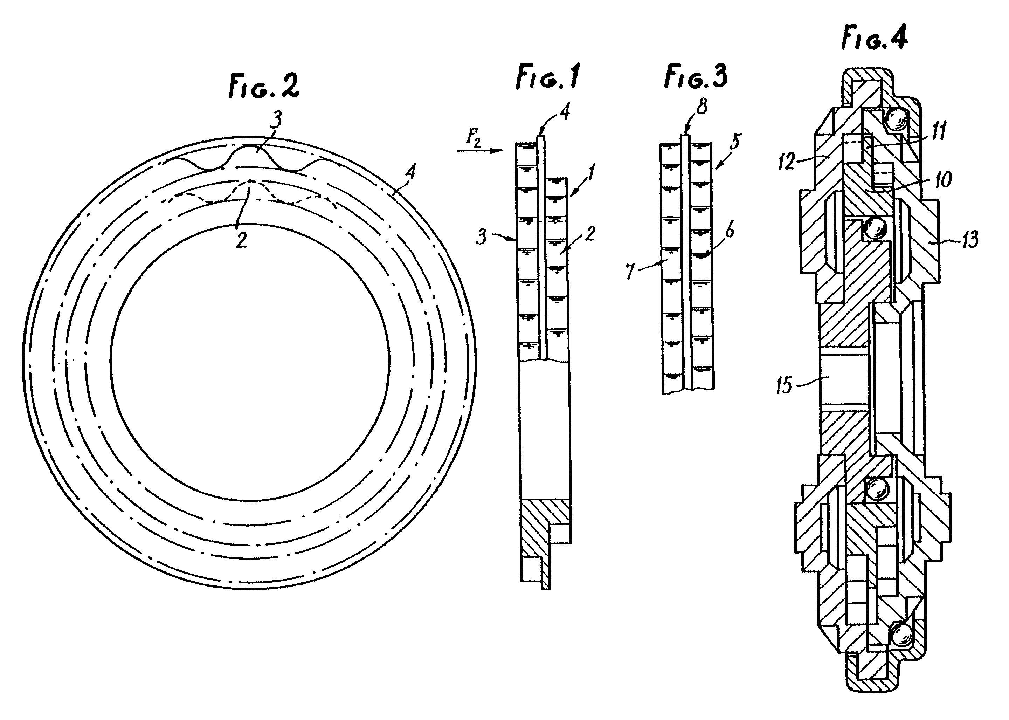

Aux fig. 1 et 2, on a représenté un satellite 1 qui est réalisé, à partir d'une pièce massive qui est soumise par matriçage entre une matrice et un poinçon à la réalisation d'un côté, d'un petit diamètre de denture 2 et de l'autre côté, le grand diamètre de denture 3.

Dans ce cas, le module des dents est identique et le satellite présente, dans son plan médian, une joue centrale 4 qui forme l'élément de résistance entre les dentures. Ce procédé de réalisation de satellite permet que les poinçons des dentures ne rentrent plus dans la matrice correspondante, ce qui favorise la durée de travail des outillages.

A la fig. 3, on a représenté un satellite 5 dont les dentures 6 et 7 ont un même diamètre mais possèdent un nombre de dents différent puisque le module des dents est différent.

L'invention permet d'obtenir une meilleure résistance du satellite puisque, même en diminuant son épaisseur, on augmente assez sensiblement le diamètre de la petite denture et comme la joue centrale 8 est placée dans le plan médian du satellite elle permet d'épauler considérablement les deux dentures et donc leur résistance.

Il y a lieu également d'attirer l'attention sur le fait qu'aussi bien pour le cas de la fig. 1 que pour le cas de la fig. 3, le satellite est guidé entre les deux flasques de l'articulation par la joue centrale 4 ou 8 qui dépasse à chaque fois le diamètre maximum des dentures et également empêche un échappement facile de la zone dentée comprise entre les flasques de l'articulation et du satellite. Ceci, d'ailleurs, est particulièrement bien montré à la fig. 4 où l'on voit un satellite 10 sensiblement identique à celui de la fig. 1 qui est guidé du fait de sa joue centrale 11 entre les deux flasques fixes 12 et mobiles 13 en ayant donc ainsi les caractéristiques complémentaires indiquées ci-dessus.

A cette compensation du satellite s'ajoute le fait que l'on réalise celui-ci par un procédé classique mais amélioré du fait que les dents des deux côtés du satellites sont matricées en une seule passe de travail, d'où un positionnement aisé du satellite dans les dentures intérieures des flasques et qu'ensuite on obtient une régularité de la position angulaire d'un flasque par rapport à l'autre flasque, qualité qui s'étend également à une fabrication série permettant de monter deux articulations sur un même siège dans une bonne position d'origine, ce qui permet au carré ou étoile d'entraînement 15 (voir fig. 4) d'être parfaitement en concordance de position des deux côtés du même siège et qu'ensuite on peut monter, sur machines automatiques, les barres d'accouplement des deux articulations micrométriques.

## Revendications

1. Satellite double à denture renforcée pour articulation micrométrique utilisée plus spécialement dans les sièges de véhicules, satellites dans lesquels les dentures (2, 3) ayant des diamètres différents mais un même module de dent ou un même diamètre de denture (6, 7) mais des modules différents de denture, sont réalisées par matriçage sur une certaine profondeur d'un disque (2), caractérisé en ce que le matriçage ménage, dans le plan médian du disque (2), une joue centrale (4, 8) contre les côtés opposés de laquelle s'appuient respectivement les dentures (2, 3 ou 6, 7) en raidissant de ce fait chaque dent pour éviter son écrasement ou sa déformation.

2. Satellite double à denture renforcée pour articulation micrométrique utilisée plus spécialement dans les sièges de véhicules suivant la revendication 1, caractérisé en ce qu'il est réalisé par une seule passe de travail.

## Patentansprüche

1. Doppeltes Planetengetriebe mit verstärkter Verzahnung für ein mikrometrisches Gelenk, insbesondere verwendet in Fahrzeugsitzen, bei welchem die Verzahnungen (2, 3) entweder unterschiedlichen Durchmesser aber denselben Zahnmodul, oder die Verzahnungen (6, 7) gleichen Durchmesser aber unterschiedlichen Zahnmodul aufweisen und mittels Gesenkformen über eine bestimmte Tiefe einer Scheibe (2) hergestellt sind, dadurch gekennzeichnet, daß beim Gesenkformen in der Mittelebene der Scheibe (2) eine zentrale Platte (4, 8) bestehen bleibt, an deren gegenüberliegenden Seiten die jeweiligen Verzahnungen (2, 3 oder 6, 7) anliegen und so jeden Zahn zur Vermeidung seiner Quetschung oder Deformierung aussteifen.

2. Doppeltes Planetengetriebe mit verstärkter Verzahnung für ein mikrometrisches Gelenk, insbesondere verwendet in Fahrzeugsitzen, gemäß Anspruch 1, dadurch gekennzeichnet, daß es in einem einzigen Arbeitsschritt hergestellt ist.

## Claims

1. Reinforced double toothing planet gear for micrometric articulation used more especially in the vehicle seats, planet gear in which toothings (2, 3) having different diameters but a same tooth module or toothings (6, 7) of a same diameter but different tooth modules, are made by die stamping of a disc (2) down to a certain depth, characterized in that the die stamping provides, in the median plane of the disc (2), a central cheek (4, 8) against the opposed sides of which bear respectively the toothings (2, 3 or 6, 7), thereby stiffening each tooth for preventing its crushing or its deformation.

2. Reinforced double toothing planet gear for micrometric articulation used more especially in the vehicle seats according to claim 1, characterized in that it is made in a single working pass.

Fig.4

Fig.3

Fig.1

Fig.2